(19) Europäisches Patentamt / European Patent Office / Office européen des brevets

(11) **EP 4 462 060 B1**

(12) **EUROPEAN PATENT SPECIFICATION**

(45) Date of publication and mention
of the grant of the patent:
**01.04.2026 Bulletin 2026/14**

(21) Application number: **22918694.5**

(22) Date of filing: **16.09.2022**

(51) International Patent Classification (IPC):
*F28F 3/06* (2006.01)   *B01J 19/24* (2006.01)
*F28D 9/00* (2006.01)   *F28F 21/08* (2006.01)

(52) Cooperative Patent Classification (CPC):
**F28F 3/06; B01J 19/24; F28D 9/00; F28D 9/0037;
F28F 13/003; F28F 21/08**

(86) International application number:
**PCT/JP2022/034821**

(87) International publication number:
**WO 2023/132105 (13.07.2023 Gazette 2023/28)**

(54) **HEAT EXCHANGE STRUCTURE**

WÄRMETAUSCHERSTRUKTUR

STRUCTURE D'ÉCHANGE DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.01.2022 JP 2022001642**

(43) Date of publication of application:
**13.11.2024 Bulletin 2024/46**

(73) Proprietor: **IHI Corporation**
**Tokyo 135-8710 (JP)**

(72) Inventor: **YOSHINOYA, Takuya**
**Tokyo 135-8710 (JP)**

(74) Representative: **TBK**
**Bavariaring 4-6**
**80336 München (DE)**

(56) References cited:
**EP-B1- 1 418 397          WO-A1-2014/055045
WO-A1-2014/055045     JP-A- 2000 088 490
JP-A- 2003 343 248      JP-A- 2006 308 127
JP-A- 2006 308 127      JP-A- 2013 158 721
JP-A- 2014 151 245      JP-A- 2020 134 109
JP-U- S 526 259          JP-U- S5 177 657
US-A1- 2006 245 987     US-B1- 6 284 206**

**Description**

TECHNICAL FIELD

The present disclosure relates to a heat exchange structure for performing heat exchange between two fluids.

BACKGROUND ART

A catalytic reactor of a heat exchange type is equipped with a heat exchange structure for performing heat exchange between two fluids. The heat exchange structure has a heat-medium flow channel and a reaction flow channel adjacent to each other. The heat-medium fluid flows in the heat-medium flow channel. The reaction fluid including the reaction raw material flows in the reaction flow channel. The heat-medium flow channel and the reaction flow channel are thermally coupled to each other through a partition wall. Therefore, heat exchange occurs between the heat-medium fluid and the reaction fluid with a temperature difference, and the reaction of the reaction material is promoted.

In order to improve the overall heat transfer coefficient between the heat-medium fluid and the reaction fluid, a fin structure may be installed in at least one of the heat-medium flow channel and the reaction flow channel. The fin structure is called a corrugated fin or a waving fin, etc., and is formed by bending a metal plate. The fin structure has fins (sides) that are elongated or curved in the longitudinal direction of the flow channel in which the fin structure is installed. In this regard, document JP 2017-140591 A discloses a heat transfer promotor as the fin structure. When the fin structure described above is installed in a reaction flow channel, a catalyst may be supported on the fin structure.

Document WO 2014/055045 A1 is considered closest prior art and discloses the features of the preamble of claim 1. Document JP 2006 308127 A discloses a similar heat exchange structure.

SUMMARY OF THE INVENTION

TECHNICAL PROBLEM

To facilitate the attachment of the fin structure to the flow channel, a predetermined clearance (gap) is provided between the fin structure and the inner peripheral surface of the flow channel. The clearance reduces friction between the fin structure and the flow channel and facilitates the insertion of the fin structure into and removal from the flow channel. That is, the clearance is essentially provided for the insertion and removal of the fin structure. However, it is also a space that forms a fluid flow with a low contribution to heat exchange or reaction. Thus, the clearance may be one of the factors that reduce heat transfer performance.

The present disclosure has been made considering the above situations, and the object is to provide a heat exchange structure capable of improving the workability of installation or removal while suppressing the deterioration of heat transfer performance.

The object of the invention is achieved by a heat exchange structure according to claim 1. Advantageous embodiments are carried out according to the dependent claims.

TECHNICAL SOLUTION

A heat exchange structure according to the present disclosure includes: a flow channel thermally coupled with another flow passage stacked to each other in a stacking direction; and a path-configuration portion provided in the flow channel. The path-configuration portion includes wall portions forming a path of a main flow of a fluid, and a porous body provided in the path and having permeability to the fluid.

The wall portions have permeability to the fluid. In this case, the permeability of the wall portions is lower than the permeability of the porous body to the fluid.

EFFECT OF THE INVENTION

According to the present disclosure, it is possible to provide a heat exchange structure capable of improving the workability of installation or removal while suppressing deterioration of heat transfer performance.

BRIEF DESCRIPTION OF THE DRAWINGS

FIG. 1 is a cross-sectional view of a Y-Z plane of a flow channel in a heat exchange structure according to a first embodiment not belonging to the invention.

FIG. 2 is an exploded perspective view of the heat exchange structure.

FIG. 3 is a view for explaining the flow of fluid in the path-configuration portion according to the first embodiment and is a cross-sectional view taken from the Y direction.

FIG. 4 is a view showing a first modification of the path-configuration portion according to the first embodiment.

FIG. 5 is a view showing a second modification of the path-configuration portion according to the first embodiment.

FIG. 6 is a view showing a third modification of the path-configuration portion according to the first embodiment.

FIG. 7 is a view for explaining the configuration of the path-configuration portion according to a second embodiment correspoding to the invention and the flow of fluid therein, and is a cross-sectional view taken from the Y-direction.

FIG. 8 is a perspective view showing modifications of the wall portion and the porous body.

FIG. 9A is a side view of a path-configuration portion in a heat exchange structure according to another embodiment.

FIG. 9B is a side view of a path-configuration portion in a heat exchange structure according to another embodiment.

FIG. 9C is a side view of a path-configuration portion in a heat exchange structure according to another embodiment.

FIG. 9D is a side view of a path-configuration portion in a heat exchange structure according to another embodiment.

FIG. 9E is a side view of a path-configuration portion in a heat exchange structure according to another embodiment.

FIG. 10 is a side view showing a reaction device with a heat exchange structure according to each embodiment of the present disclosure.

FIG. 11 is a cross-sectional view of XI-XI in FIG. 10.

FIG. 12 is a cross-sectional view of XII-XII in FIG. 10.

FIG. 13 is a three-dimensional cross-sectional view showing a part of a heat exchange section as a heat exchange structure in a reactor.

DESCRIPTION OF EMBODIMENTS

Hereinafter, heat exchange structures 50 according to some exemplary embodiments will be described with reference to the drawings. It should be noted that the same reference numerals are used for common parts in the drawings, and descriptions to be duplicated will be omitted. For convenience of explanation, the X, Y, and Z directions are defined as three mutually orthogonal directions. The X direction is a width direction of the flow channels (flow passages) 51 and 52, which will be described later, and is also the arrangement direction when flow channels are provided in parallel. The Y direction is a stacking direction of the flow channels 51 and 52, and is also the main heat transfer direction between the flow channels. The Z direction is a longitudinal direction (extending direction) of each flow channel. The path-configuration portions described later are formed separately from the flow channels 51 and 52 and are provided in at least one of the flow channels 51 and 52. Hereinafter, for convenience of explanation, an example will be described in which the path-configuration portions 60 are provided only in the flow channels 51.

(First Embodiment)

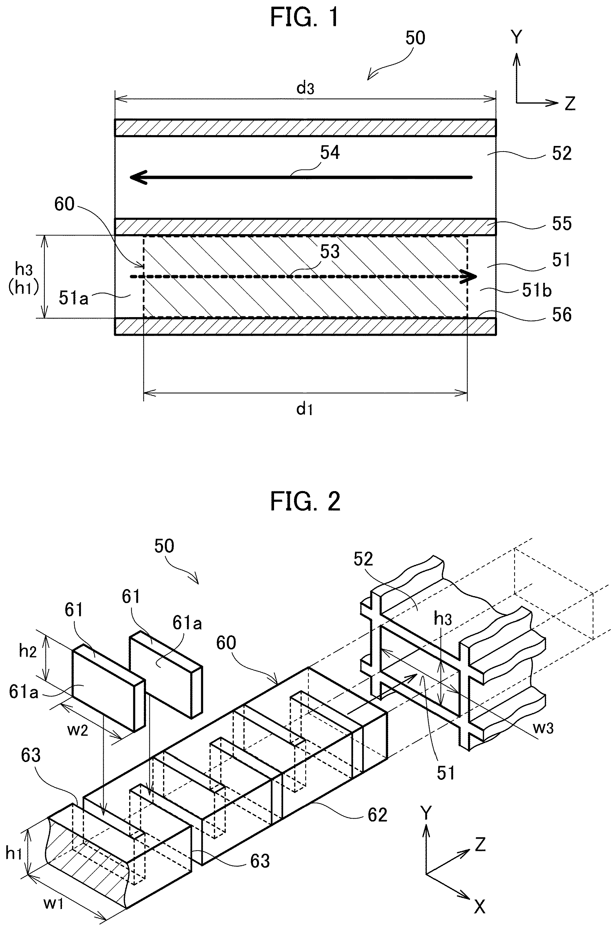

A first embodiment of the present disclosure will be described below. FIG. 1 is a cross-sectional view of a Y-Z plane of a flow channel in a heat exchange structure according to the first embodiment. FIG. 2 is an exploded perspective view of the heat exchange structure. As shown in FIG. 1, the heat exchange structure 50 according to the first embodiment includes at least one flow channel (flow passage) 51 and at least one flow channel (flow passage) 52. As shown in FIG. 2, the flow channel 51 and the flow channel 52 have a length h3 along the Y direction (i.e., height) and a length w3 along the X direction (i.e., width), and extend in the Z direction which is the longitudinal direction. The flow channel 51 and the flow channel 52 are stacked along the Y direction (stacking direction). The cross-sectional shapes of the flow channel 51 and the flow channel 52 along the Y direction are not limited to the rectangles shown in FIG. 2.

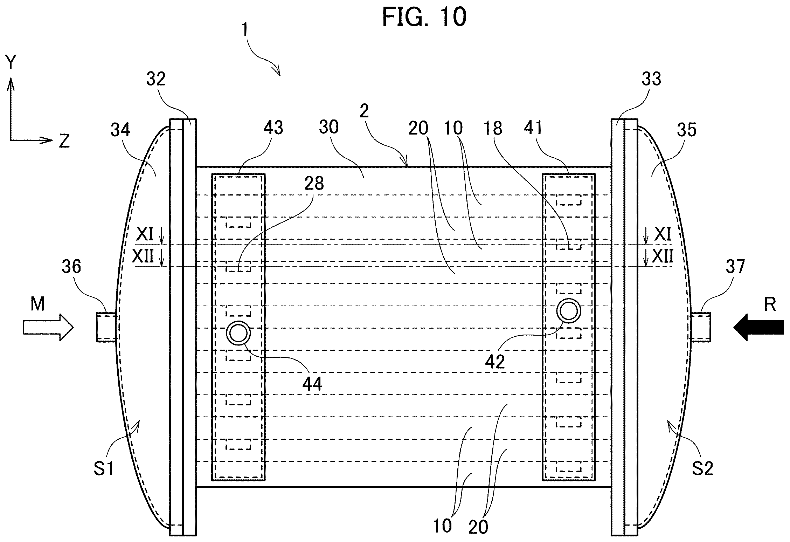

The flow channel 51 and the flow channel 52 are provided in parallel and are thermally coupled to each other through a partition wall 55. The flow channel 51 may be applied as one of the first flow channel 11 and the second flow channel 21 in the heat exchange section 2 (see FIGs. 10 to 13) of the reactor 1 described later. The flow channel 52 may be applied as the other flow channel of the first flow channel 11 and the second flow channel 21. In this case, the flow channel 51 and the flow channel 52 are alternately stacked along the Y direction, and the partition wall 55 between the flow channel 51 and the flow channel 52 corresponds to each of the first partition wall 13 and the second partition wall 23 of the reactor 1.

The heat exchange structure 50 may include a plurality of flow channels 51 and a plurality of flow channels 52. For example, the plurality of flow channels 51 are disposed on a plane parallel to the X-Z plane, and the plurality of flow channels 52 are disposed on another plane parallel to the X-Z plane. In this case, the longitudinal direction of the flow channel 51 and the longitudinal direction of the flow channel 52 may be parallel to each other and may intersect each other. In other words, the latter may be in a skew relation. In either case, one of the flow channels 51 and 52 is thermally coupled to the other of the flow channels 51 and 52 through a partition wall 55 in substantially the entire longitudinal direction thereof.

As shown in FIG. 1, fluid 53 flows through the flow channel 51 and fluid 54 flows through the flow channel 52. The fluid 53 is one of the heat-medium fluid M and the reaction fluid R described later. The fluid 54 is the other of the heat-medium fluid M and the reaction fluid R. The flow of the fluid 53 and the fluid 54 may be countercurrent or parallel flow.

There is a temperature difference $\Delta T$, between fluid 53 and fluid 54. Therefore, when fluid 53 flows through flow channel 51 and fluid 54 flows through flow channel 52, heat is transferred between the fluid 53 and the fluid 54. Specifically, the heat is transferred between the fluid 53 and the fluid 54 due to convection between the fluid 53 and the partition 55, thermal conduction within the partition 55, and convection between the partition 55 and the fluid 54.

In this case, the amount of heat Q per unit time is proportional to the product of the overall heat transfer coefficient (heat transfer rate) U, the heat transfer area A of the partition 55, and the temperature difference $\Delta T$ between the fluid 53 and the fluid 54. That is, the relationship among these values is expressed by the following formula (1):

$$Q = UA \; (\Delta T) \; \cdots \; (1)$$

Here, the heat transfer area A is constant. Since the fluid 53 and the fluid 54 flow steadily, the change in the temperature difference $\Delta T$ is small. Therefore, it is found that the increase in amount of heat Q is obtained by increasing the overall heat transfer coefficient U.

There is also the following relationship among the overall heat transfer coefficient U, the heat transfer coefficient H1 between the fluid 53 and the partition 55, the heat transfer coefficient H2 between the partition 55 and the fluid 54, and the thermal conductivity K of the partition 55.

$$1/U = 1/H1 + 1/H2 + T/K \; \cdots \; (2)$$

where T is the thickness of the partition 55.

From the formula (2), it is found that the overall heat transfer coefficient U increases when at least one of the heat transfer coefficients H1 and H2 increases.

The heat transfer coefficient H1 increases when the main flow of the fluid 53 approaches or enters the temperature boundary layer near the partition wall 55. That is, the heat transfer coefficient H1 increases by deflecting the main flow toward the partition wall 55 or by generating turbulence in the main flow with a component toward the partition wall 55. This tendency is same for the heat transfer coefficient H2, and the heat transfer coefficient H2 increases by controlling the flow of the fluid 54. By increasing at least one of the heat transfer coefficient H1 and the heat transfer coefficient H2, the overall heat transfer coefficient U increases, and finally the heat quantity Q increases. That is, the overall heat transfer coefficient between the two fluids can be improved in a space of limited length. In other words, it is possible to suppress at least the deterioration of heat transfer performance.

Next, a path-configuration portion according to the present embodiment will be described. The heat exchange structure 50 includes a path-configuration portion 60. The path-configuration portion 60 includes wall portions 61 and a porous body 62. The wall portions 61 form a path of a main flow of the fluid 53. The porous body 62 is provided in the path. The porous body 62 has permeability to the fluid 53. The path-configuration portion 60 is configured to be exchangeable with respect to the flow channel 51 by adjusting its size or the like. The path formed by the wall portions is not limited to the path formed between the wall portions adjacent to each other, but also includes the path formed between the wall portions and the inner peripheral surface of the flow channel. The wall portions 61 and the porous body 62 may be held together by friction between their contact surfaces, and may be joined (integrated) to each other by joining means such as adhesion, brazing or diffusion joining. Otherwise, they may be held integrally by fastening members such as pins or rivets.

The wall portion 61 has a surface 61a that extends in directions orthogonal to the Z direction (i.e., the X and Y directions). For example, as shown in FIG. 2, the wall portion 61 is formed in a plate-like shape that extends in the X and Y directions. The wall portion 61 has a length (i.e., width) w2 along the X direction and a length (i.e., height) h2 along the Y direction. The width w2 of the wall portion 61 is smaller than the width w3 of the flow channel 51 and the width w1 of the porous body 62, and the height h2 of the wall portion 61 is equal to the height h1 of the porous body 62.

The wall portions 61 are arranged at intervals in the Z direction of the flow channel 51 while being displaced in a direction parallel to the extending direction of the surface 61a. For example, as shown in FIG. 2, the wall portions 61 are arranged along the Z direction alternately on one side and the other side of the flow channel 51 in the X direction. In other words, the wall portions 61 are staggered with intervals along the Z direction. With this arrangement, the path of the main flow of the fluid 53 is meandered in the X direction. The wall portions 61 are inserted into grooves 63 of the porous body 62 having complementary sizes to the wall portions 61. The grooves 63 support the wall portions 61 and define the positions of the wall portions 61.

The wall portion 61 is formed of a plate-like member formed of heat-resistant and heat-conductive material. The heat-conductive material is, for example, heat-resistant metal or ceramic. Further, the wall portion 61 does not permeability to the fluid 53. Accordingly, the fluid 53 passes through the porous body 62 except for the leakage flow between the flow channel 51 and the path-configuration portion 60. However, as described later, the wall portion 61 may have the permeability.

The porous body 62 occupies a part other than the wall portion 61 in the structure constituting the path-configuration portion 60. The porous body 62 has a large number of voids (vacuoles, or pores) connected with each other. Therefore, the porous body 62 has permeability to the fluid. The porous body 62 is, for example, a metal foam body (foamed metal body) formed of an open-celled body (open-cell structure) or a porous sintered body having a large number of communicating holes (through holes) . When the porous body 62 is a metal foam body, the permeability is determined depending on porosity of the porous body 62. The Porosity is the ratio of the volume of space occupied within the total volume of a material to the total volume of the material.

As shown in FIG. 2, the porous body 62 has a width w1 along the X direction and a height h1 along the Y direction. The width w1 of the porous body 62 is equal to the width w3 of the flow channel 51. The "equal" means substantially equal. That is, it means having a value that enables the installation of the porous body 62 in the flow channel 51 while minimizing leakage flow between the porous body 62 and the inner peripheral surface (inner peripheral wall) 56 (see FIG. 1) of the flow channel 51 as much as possible, and it is not limited to exact matching between the width w1 and the width w3. For example, when considering the elasticity of the porous body 62, the width w1 may be set to a value larger than the width w3 of the flow channel 51 as long as the porous body 62 can be installed. In this case, the degree of adhesion between the partition wall 55 and the porous body 62 is increased, and the heat transfer performance can be improved.

Similarly to the width w1, the height h1 of the porous body 62 is equal to the height h3 of the flow channel 51. The depth d1 of the porous body 62 is appropriately set in accordance with the dimensions and usage of the flow channel 51. For example, the depth d1 is set to a value equal to or less than the depth d3 of the flow channel 51. Note that the depth d1 of the porous body 62 is substantially equal to the length L of the path-configuration portion 60 in the Z direction.

The porous body 62 has grooves 63 into which wall portions 61 are inserted. The groove 63 has a complementary dimension to the wall portion 61. The groove 63 supports the wall portion 61 and defines its position.

The porous body 62 is formed of a material having heat resistance and capable of supporting a catalyst thereon. Such a material is a heat-resistant alloy which mainly consists of one or a plurality of metals such as Fe (iron), Cr (chromium), Al (aluminum), Y (yttrium), Co (cobalt), Ni (nickel), Mg (magnesium), Ti (titanium), Mo (molybdenum), W (tungsten), Nb (niobium), and Ta (tantalum). For example, the porous body 62 may be manufactured by molding a thin-plate structured material made of a heat-resistant alloy such as Fecralloy (registered trademark). Alternatively, the material of the porous body 62 may be ceramic.

When the porous body 62 is formed of a metal foam body, some elasticity may be given to the porous body 62. The degree of elasticity can be set by adjusting the material of the metal foam body, porosity, dimensions of the supports (cell edges), etc. In general, metal foam bodies are easier to produce with higher porosity than porous sinters.

A catalyst may be supported on the porous body 62. In this case, the catalyst contains, as a main component, an active metal effective for promoting the progress of a chemical reaction. The active metal includes, for example, Ni (nickel), Co (cobalt), Fe (iron), Pt (platinum), Ru (ruthenium), Rh (rhodium), Pd (palladium), etc., of which only one kind may be used, and a plurality of kinds may be used in combination as long as they are effective for promoting the reaction. The surface area of the porous body 62 is very large compared with that of a corrugated fin having an outer shape of the same size, and the reaction can be promoted.

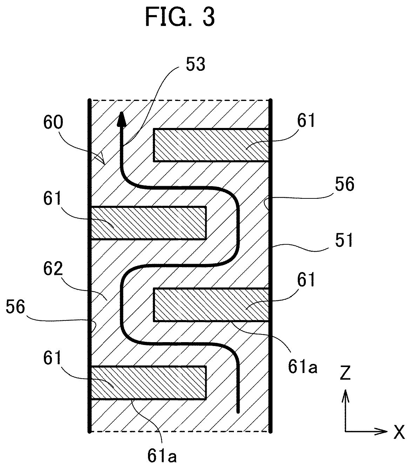

FIG. 3 is a view for explaining the flow of the fluid 53 in the path-configuration portion 60 and is a cross-sectional view taken from the Y direction. The fluid 53 in the path-configuration portion 60 flows from the upstream side (inlet side) to the downstream side (outlet side) of the flow channel 51 (from the left side to the right side in FIG. 1) while being disturbed by the collision with the porous body 62 when passing through the porous body 62. The disturbance of the flow of the fluid 53 increases the frequency with which the fluid 53 enters the temperature boundary layer near the partition wall 55, thereby suppressing the deterioration of heat transfer performance. Heat transfer is also carried out at the part where the path-configuration portion 60 and the partition wall 55 are in contact with each other. This heat transfer contributes to the improvement of the heat transfer performance described above.

The wall portion 61 is supported by the porous body 62 by being inserted into the groove 63. That is, since the porous body 62 itself functions as a support member for the wall portion 61, the path-configuration portion 60 does not have a member for supporting the wall portions 61 with each other. Accordingly, friction between the path-configuration portion 60 and the inner peripheral surface 56 (see FIG. 1) of the flow channel 51 is reduced compared with the case where such a support member is provided, and installation in the flow channel 51 and removal from the flow channel 51 are facilitated. That is, workability of installation or removal can be improved.

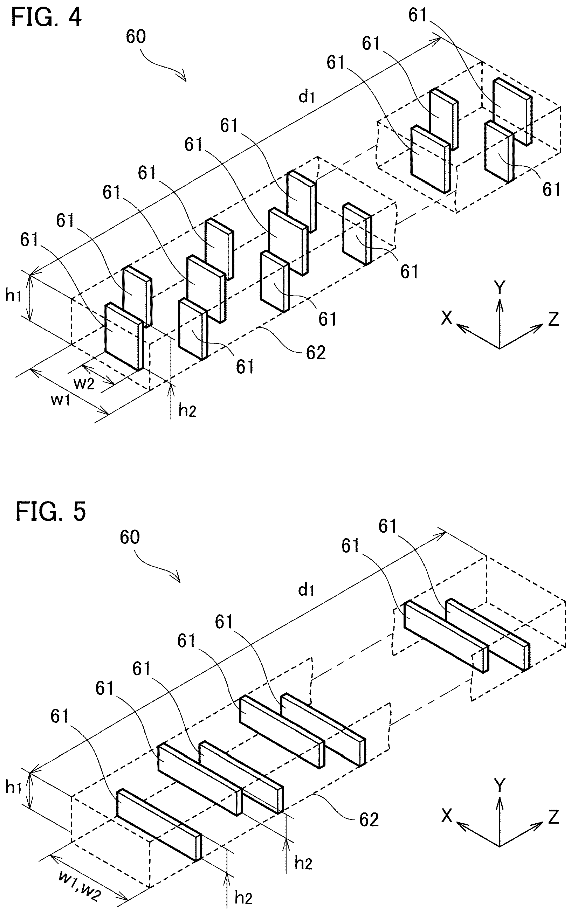

FIGs. 4, 5 and 6 are views showing the first, second and third modifications of the path-configuration portion 60 according to the present embodiment, respectively. As shown in FIG. 4, the height h2 of the wall portion 61 according to the first modification is equal to the height h1 of the porous body 62. On the other hand, the width w2 of the wall portion 61 is smaller than the width w1 of the porous body 62. The number of the wall portions 61 along the X direction varies according to the position along the Z direction. For example, as shown in FIG. 4, one wall portion 61 is arranged at the center of the flow channel 51 in the width direction. Two wall portions 61, 61 are arranged at both ends of the flow channel 51 in the width direction. The one wall portion 61 and the two wall portions 61, 61 are alternately arranged along the Z direction.

Accordingly, the main flow of the fluid 53 is divided into two flows, and flows in the Z direction while meandering in the X direction so as to repeat merging and separation.

As shown in FIG. 5, the width w2 of the wall portion 61 according to the second modification is equal to the width w1 of the porous body 62. On the other hand, the height h2 of the wall portion 61 is smaller than the height h1 of the porous body 62. In this case, as shown in FIG. 5, the wall portions 61 are alternately arranged along the Z-direction on one side and the other side of the flow channel 51 in the Y-direction. Accordingly, the main flow of the fluid 53 flows in the Z-direction while meandering in the Y-direction. Similarly to the first modification, in the second modification, the number of the wall portions 61 along the Y direction may change according to the position along the Z direction.

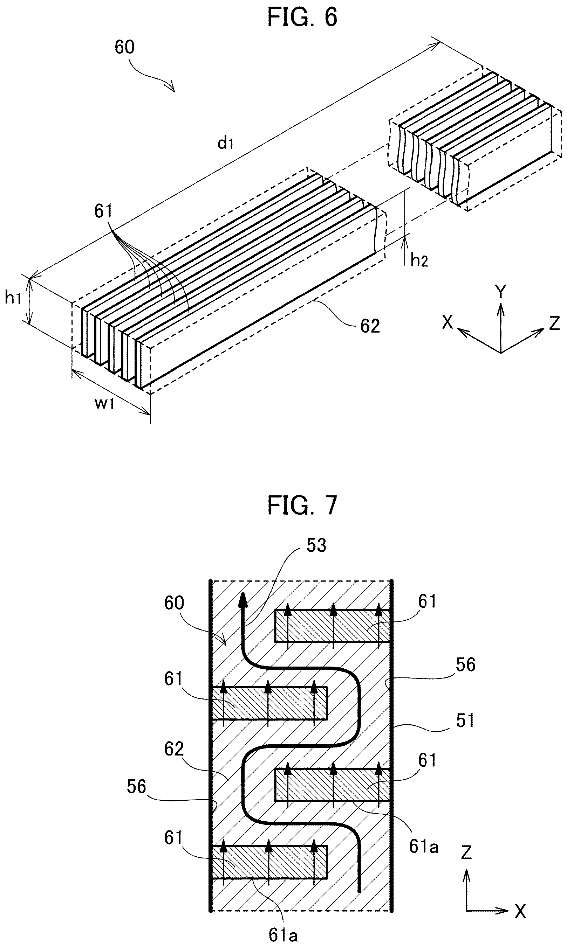

As shown in FIG. 6, the wall portions 61 according to the third modification may be formed in a plate-like shape (zonal shape) extending in the Z direction and may be arranged in parallel with each other while being spaced in the X direction. For example, the wall portions 61 may be formed in a plate-like shape extending in the Y and Z directions. In this case, the height h2 of the wall portions 61 is equal to the height h1 of the porous body 62. Otherwise, the height h2 of the wall portions 61 may be set to less than half of the height h1 of the porous body 62, and groups of rows of the porous bodies 62 and the wall portions 61 arranged alternately in the X direction may be provided in the Y direction so that the phases of the respective arrangements are shifted in the X direction.

(Second Embodiment)

A second embodiment of the present disclosure will be described below. The second embodiment differs from the first embodiment only in the characteristics of the wall portion of the path-configuration portion, and the other configurations of the second embodiment apply those of the first embodiment. Accordingly, the path-configuration portion 60 according to the second embodiment will be described, but the common structure of the first embodiment will be denoted by the same reference numerals and the description thereof will be omitted.

FIG. 7 is a view for explaining the configuration of the path-configuration portion 60 according to the second embodiment and the flow of fluid therein, and is a cross-sectional view taken from the Y-direction. As in the first embodiment, the path-configuration portion 60 includes wall portions 61 and a porous body 62. The wall portions 61 form the path of the main flow of the fluid 53. The porous body 62 is provided within the path of the main flow of the fluid 53 formed by the wall portion 61. As in the first embodiment, the porous body 62 has permeability. On the other hand, the wall portions 61 have also permeability to the fluid 53. Therefore, in the second embodiment, the wall portions 61 and the porous body 62, which are the components of the path-configuration portion 60, are both permeable.

The wall portions 61 are made of the same material as the porous body 62. That is, the wall portion 61 is a metal foam body (foamed metal body) formed of an open-celled body (open-cell structure) or a porous sintered body having a large number of communicating holes (through holes). However, the permeability of the wall portion 61 is lower than that of the porous body 62 to the fluid 53.

Similar to the wall portion 61 of the first embodiment, the wall portion 61 of the second embodiment also functions as a wall for deflecting the flow of the main flow of the fluid 53. However, as described above, the wall portion 61 has permeability, and its permeability is lower than that of the porous body 62. Accordingly, as shown in FIG. 7, most of the main flow of the fluid 53 is deflected by the wall portions 61 and flows through the porous body 62. Furthermore, a part of the main flow of the fluid 53 can pass through the wall portions 61. Since the wall portions 61 allows the fluid 53 to pass therethrough, it is possible to reduce a pressure loss compared to a case where a non-permeable wall portions are used. The configuration other than the point in that the wall portion 61 is permeable can apply the configuration of the first embodiment. Therefore, the same effect as that obtained in the first embodiment can be obtained in the second embodiment.

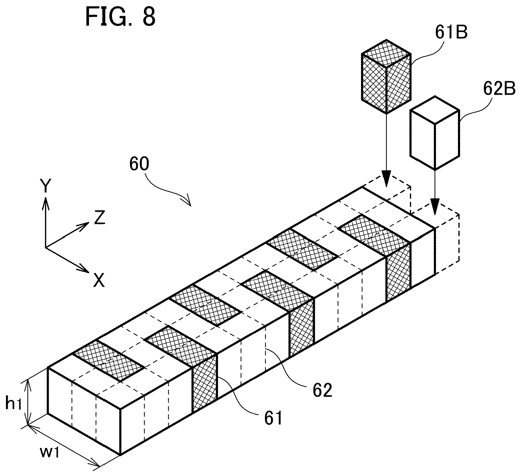

FIG. 8 is a perspective view showing modifications of the wall portion 61 and the porous body 62. As shown in this figure, the porous body 62 may be formed of an assembly blocks 62B arranged as a path of the main flow of the fluid 53. Similarly, the wall portion 61 may be formed of an assembly of blocks 61B arranged as a wall for the main flow of the fluid 53. Subdivision of the porous body 62 and wall portion 61 provides greater freedom in setting the path of the main flow. In addition, when it is difficult to form a desired path with a single porous member, the path can be formed by laying the blocks.

The spacing of the wall portions 61 adjacent to each other along the Z direction may be constant or varied. The spacing of the wall portions 61 adjacent to each other along the X direction may also be constant or varied. By varying the spacing, it is possible to vary the local overall heat transfer coefficient along the Z or X direction.

The outer shapes of the blocks 61B and 62B are not limited to rectangular parallelepipeds shown in FIG. 8. In other words, the blocks 61B and 62B may be other polyhedra as long as they can stably exist in shape as the path of the main flow or the smallest structural unit constituting the wall portion for the path, and their outer surfaces need not have perfect planes. For example, when the block 61B of the wall portion 61 or the block 62B of the porous body 62 is formed from metal particles, fine undulations are formed on the outer surface of the block. In this case, adjacent blocks may form spaces where some of their boundaries come into contact (bond) and other areas are sufficiently larger than the pores in the block. The shape of the wall portion 61 is not limited to the shapes shown in FIGs. 2 and 8. For example, the wall portion 61 may have a rod-like shape extending in a predetermined direction (e.g., X direction or Y direction).

(Other Embodiments)

Other embodiments of the present disclosure will be described below.
In this embodiment, the first and second embodiments described above also apply to the materials, dimensions, and relative positional relationships of the wall portion 61 and the porous body 62 in the path-configuration portion 60.

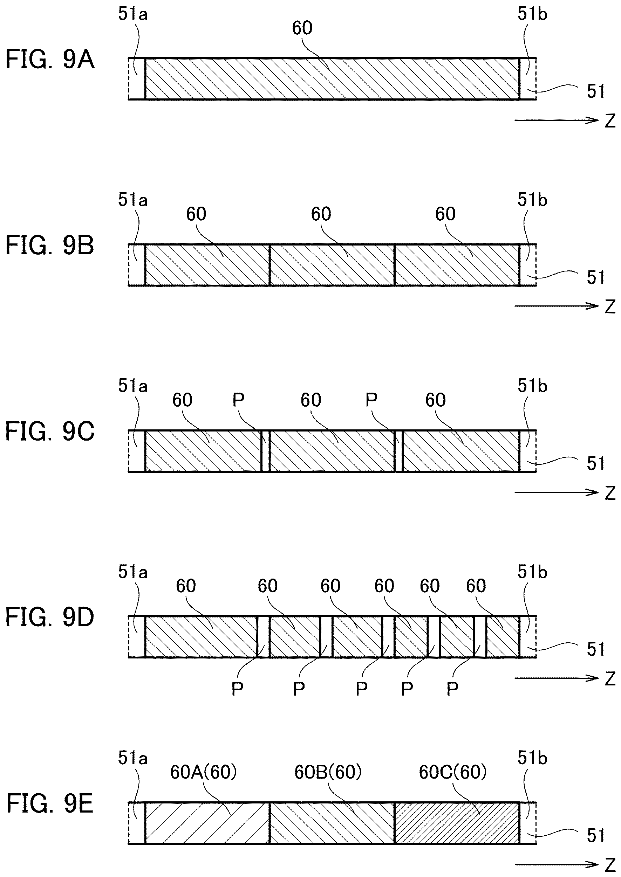

FIGs. 9A to 9E are side views of a path-configuration portion in a heat exchange structure according to other embodiments. Here, the wall portion 61 is omitted in each figure. The total length of the path-configuration portion 60 described above is not limited to a value close to the total length of the flow channel 51. That is, it may be continuously disposed from the inlet 51a to the outlet 51b of the flow channel 51 as shown in FIG. 9A. Otherwise, it may be divided into pieces (sections) arranged along the flow channel 51 as shown in FIG. 9B. In the latter case, by dividing the path-configuration portion 60, a deformation of the path-configuration portion 60 such as bending during the installation can be suppressed.
Furthermore, the divided path-configuration portions 60 may be arranged at intervals along the flow channel 51 (see FIG. 9C). By securing these intervals P, the restriction by the wall portion 61 against the main flow of the fluid 53 in the flow direction is temporarily relaxed within the intervals, thereby reducing the resistance to the flow of the fluid 53. The effect of setting these intervals is particularly effective when the continuity of the path of the main flow of the fluid 53 is broken (e.g., when the permeability of the porous body 62 changes in accordance with the position of the porous body 62 (i.e., the position of the path-configuration portion 60 including the porous body 62)).
As shown in FIG. 9D, the interval P of the divided path-configuration portions 60 or the length L of the divided path-configuration portions 60 may vary stepwise along the flow channel 51. By adjusting the interval or length, the density (i.e., the total length of the path-configuration portion 60 per unit length) of the path-configuration portion 60 in the flow channel 51 may be adjusted for each location. Accordingly, in the flow channel 51, it is possible to adjust the heat transfer area and the heat transfer performance by the path-configuration portion 60.
The permeability of the porous body 62 may change stepwise according to its position on the flow channel 51. For example, as shown in FIG. 9E, when three path-configuration portions 60A, 60B, and 60C are arranged from the inlet 51a to the outlet 51b of the flow channel 51, the permeability of the porous body 62 of the path-configuration portion 60B may be smaller than that of the porous body 62 of the path-configuration portion 60A, and the permeability of the porous body 62 of the path-configuration portion 60C may be set smaller than that of the porous body 62 of the path-configuration portion 60B. By such a setting, it is possible to change the required heat transfer performance depending on the position of the flow of the fluid 53. By changing the permeability, the area of the porous body 62 with which the fluid 53 contacts is changed. Accordingly, for example, it is possible for the fluid 53 to change the probability of contacting the catalyst supported on the porous body 62.
As described above, the heat transfer coefficient H1 is increased by increasing the frequency with which the main flow of the fluid 53 flows into the vicinity of the partition wall 55. This tendency is same for the heat transfer coefficient H2. In particular, when the flow of the main flow of at least one of the fluid 53 and the fluid 54 is meandered in the X or Y direction, the flow channel length of the fluid increases, and the frequency of the flow of the main flow of the fluid into the temperature boundary layer near the partition wall 55 increases. Therefore, the heat transfer between the fluid and the partition wall 55 is promoted. Since at least one of the heat transfer coefficient H1 and the heat transfer coefficient H2 increases, the overall heat transfer coefficient U increases, and the heat quantity Q eventually increases. That is, it is possible to improve the overall heat transfer coefficient between the two fluids in a space of limited length. In other words, at least, it is possible to suppress the reduction of heat transfer performance.

(Application Examples of Heat Exchange Structure)

Hereinafter, a reactor (catalytic reactor) 1 is described as an example to which the heat exchange structure 50 is applied. The reactor 1 includes a heat exchange section 2 as the heat exchange structure 50. As described later, first heat transfer bodies 10 and second heat transfer bodies 20 are stacked in the Y direction, and flow channels (hereinafter, referred to as first flow channels) 11 and second flow channels (hereinafter, referred to as second flow channels) 21 extend in the Z direction. In addition, the width direction of each channel is taken as the X direction described above. The X direction is also the alignment direction when multiple first flow channels 11 (second flow channels 21) are provided in parallel.

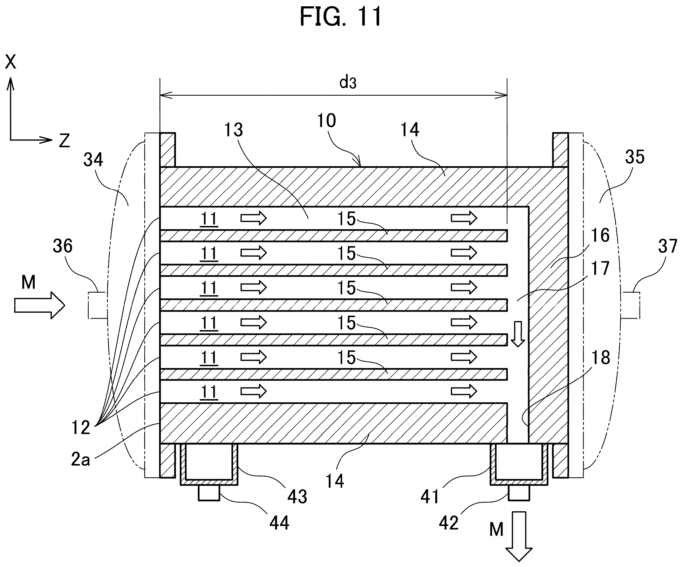

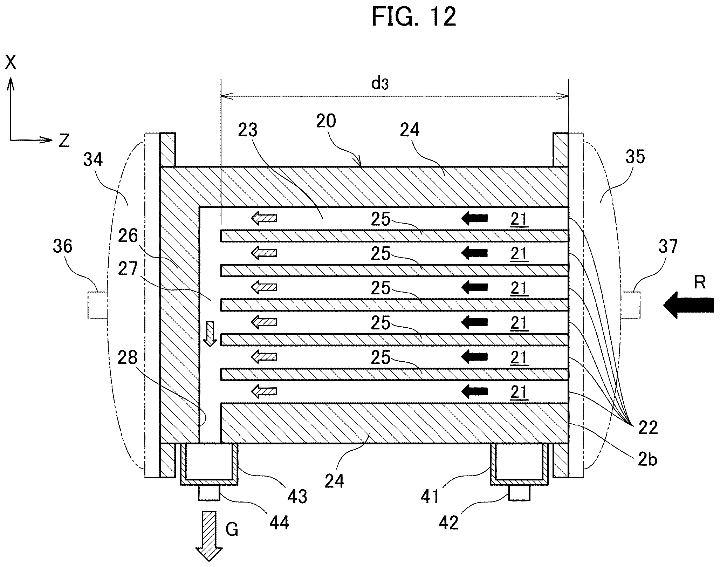

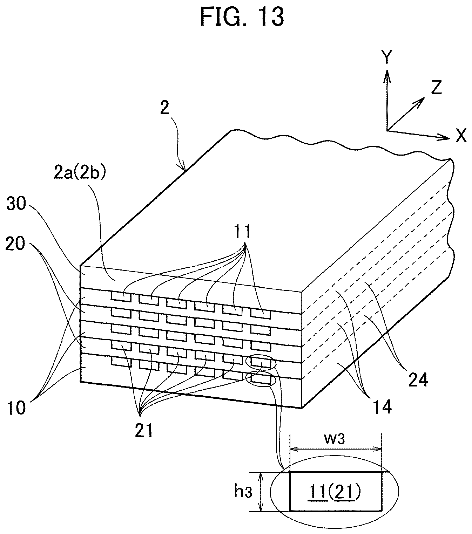

FIG. 10 is a side view illustrating the reactor (catalytic reactor) 1 including the heat exchange structure 50 according to the present embodiment. FIG. 11 is a cross-sectional view taken along the line XI-XI in FIG. 10. FIG. 12 is a cross-sectional view taken along the line XII-XII in FIG. 10. FIG. 13 is a three-dimensional view with a cross section illustrating a part of the heat exchange section 2 as the heat exchange structure 50.
The reactor 1 heats or cools the reaction fluid R containing a reactive raw material to progress (promote) the reaction of the reaction fluid R. For the heating or cooling, the reactor 1 includes the heat exchange section 2 as the heat exchange structure 50 (see FIG. 1) that exchanges (transfers) heat between the heat medium M and the reaction fluid R. The heat exchange section 2 includes the first heat transfer bodies 10, the second heat transfer bodies 20, and a lid plate 30. The first heat transfer body 10, the second heat transfer body 20 and the lid plate 30 are plate members formed of heat-resistant and thermally conductive materials. They have sufficient thickness to withstand a high internal pressure generated while the reaction fluid R flows.

The first heat transfer body 10 includes the first flow channels 11 through which the heat medium M flows. The second heat transfer body 20 includes the second flow channels 21 through which the reaction fluid R flows. The first heat transfer bodies 10 and the second heat transfer bodies 20 are stacked alternately in the Y direction (i.e., the stacking direction). The lid plate 30 is set on the top of them.

With the stacking described above, the first flow channels 11 and the second flow channels 21 are adjacent to each other thorough a first partition wall 13 or a second partition wall 23 (see FIG. 13). In other words, the first flow channels 11 and the second flow channels 21 are stacked in a non-contact state in the stacking direction of the first heat transfer bodies 10 and the second heat transfer bodies 20. As described above, the first heat transfer body 10 and the second heat transfer body 20 are formed of a thermally conductive material. Therefore, the first flow channel 11 and the second flow channel 21 are thermally coupled to each other.

The heat exchange section 2 has a counter-flow type structure in which the reaction fluid R and the heat medium M flow in opposite directions. The path-configuration portion 60 described above is detachably installed in the first flow channels 11, the second flow channels 21, or both. The path-configuration portion 60 on which a catalyst is supported may be detachably installed in the second flow channel 21 through which the reaction fluid R flows.

The heat exchange section 2 is formed of at least one set of the first heat transfer body 10 and the second heat transfer body 20. The number of each heat transfer body may also be increased to improve the heat exchange performance. The number of channels formed in each heat transfer body is set depending on the design conditions of the heat exchange section 2, heat transfer efficiency, etc. In addition, a housing or insulation material may cover the heat exchange section 2 to reduce heat loss due to heat dissipation from the heat exchange section 2.

Both ends of the heat exchange section 2, which is a laminated body, are held by fixing members 32, 33. A heat medium introduction section 34 is attached to the fixing member 32. The heat medium introduction section 34 is a concavely curved lid and forms a space S1 between the section 34 and the heat exchange section 2. First inlet ports 12 of the first flow channels 11 are opened toward the space S1 (see FIG. 10). In other words, the first inlet ports 12 are opened on the side surface (end face) 2a of the heat exchange section 2 facing the heat medium introduction section 34. The heat medium introduction section 34 has a first introduction tube 36 to introduce the heat medium M. The heat medium M flows into each first flow channel 11 through the first introduction tube 36.

The heat medium introduction section 34 is detachably or openably set on the fixing member 32. By this attachment and detachment, for example, the operator can insert and remove the path-configuration portion 60 from the first flow channels 11.

The heat medium discharge section 41 is a box-shaped member having one opened face. The heat medium discharge section 41 is attached to the heat exchange section 2 so that the opened face faces the first discharge ports 18 of the first heat transfer bodies 10. The heat medium discharge section 41 includes a first discharge pipe 42. The first discharge pipe 42 discharges the heat medium M that has passed through the heat exchange section 2.

A reaction fluid introduction section 35 is attached to the fixing member 33. As similar to the heat medium introduction section 34, the reaction fluid introduction section 35 is a concavely curved lid and forms a space S2 between the section 35 and the heat exchange section 2. Second inlet ports 22 of the second flow channels 21 are opened toward the space S2 (see FIG. 10). In other words, the second inlet ports 22 are opened on the side surface (end face) 2b of the heat exchange section 2 facing the reaction fluid introduction section 35. The reaction fluid introduction section 35 has a second introduction tube 37 to introduce the reaction fluid R. The reaction fluid R flows into each second flow channel 21 through the second introduction tube 37.

The reaction fluid introduction section 35 is detachably or openably set on the fixing member 33. By this attachment and detachment, for example, the operator can insert and remove the path-configuration portion 60 from the second flow channels 21.

As similar to the heat medium discharge section 41, the product discharge section 43 is a box-shaped member having one opened face. The product discharge section 43 is attached to the heat exchange section 2 so that the opened face faces the second discharge port 28 of the second heat transfer body 20. The product discharge section 43 includes a second discharge pipe 44. The second discharge pipe 44 discharges the reaction gas G containing products derived from the reaction fluid R.

As shown in FIG. 14, the first heat transfer body 10 includes multiple first flow channels 11. The first flow channels 11 extend in the Z direction and are arranged in the X direction (the width direction). The first flow channels 11 supply the heat of the heat medium M to the first heat transfer body 10.

The first flow channels 11 are grooves formed on one surface (e.g., the upper surface in the present embodiment) of the first heat transfer body 10. Each groove has a rectangular cross section having a width w3 and a height h3 (see FIG. 13) and extends in one direction with a length of a depth d3 (see FIG. 11). The width w3 has a value greater than or equal to the width w1 of the porous body 62. Similarly, the height h3 also has a value greater than or equal to the height h1 of the porous body 62. The depth d3 is greater than the depth d1 of the porous body 62.

The first flow channels 11 linearly extend from the first inlet port 12 located on the side of the fixing member 32 toward the fixing member 33. As shown in FIG. 11, the multiple first flow channels 11 are disposed in parallel. The first flow channels 11 may be different in the width, height and length.

The first heat transfer body 10 includes a first partition wall 13, two first sidewalls 14, multiple first intermediate walls 15, and a first end wall 16. The first sidewall 14, the first intermediate walls 15 and the first end wall 16 are provided on one side of the first partition wall 13. That is, they are provided on the same surface as the surface on which the first sidewall 14, etc. is provided for the first partition wall 13. The first partition wall 13 is a rectangular wall and defines the overall shape of the first heat transfer body 10. The first sidewalls 14 are wall parts provided on both sides of the extending direction of the first flow channels 11. The first intermediate walls 15 are located between the two first sidewalls 14 and are wall parts provided in parallel with each first sidewall 14.

The first end wall 16 is provided on the opposite side of the first inlet ports 12 across the first flow channels 11. The first end wall 16 is a wall extending in the alignment direction of the first flow channels 11. The first end wall 16 blocks the inflow of the heat medium M toward the space S2.

The first heat transfer body 10 includes a first connection flow channel 17 extending along the first end wall 16. The first connection flow channel 17 is connected with all the first flow channels 11 and the first discharge port 18.

As shown in FIG. 12, the second heat transfer body 20 includes multiple second flow channels 21 including reaction regions. The middle section of the second flow channel 21 is the main reaction region. The second flow channels 21 extend in the Z direction and are arranged in the X direction (the width direction). The second flow channel 21 receives the heat of the heat medium M flowing through the first flow channel 11 in the first heat transfer body 10 to react the reaction fluid R to produce the reaction gas G containing the products derived from the reaction fluid R.

The second flow channels 21 are grooves formed on one surface (the upper surface in the present embodiment) of the second heat transfer body 20. Each groove has a rectangular cross section having a width w3 and a height h3 (see FIG. 13) and extends in one direction with a length of a depth d3 (see FIG. 12). The second flow channels 21 linearly extend from the second inlet port 22 located on the side of the fixing member 33 toward the fixing member 32. As shown in FIG. 12, the multiple second flow channels 21 are disposed in parallel.

The second heat transfer body 20 includes a second partition wall 23, two second sidewalls 24, multiple second intermediate walls 25, and a second end wall 26. The second sidewall 24, the second intermediate walls 25 and the second end wall 26 are provided on one side of the second partition wall 23. The second partition wall 23 is a rectangular wall and defines the overall shape of the second heat transfer body 20. The second sidewalls 24 are wall parts provided on both sides of the extending direction of the second flow channels 21. The second intermediate walls 25 are located between the two second sidewalls 24 and are wall parts provided in parallel with each second sidewall 24.

The second end wall 26 is provided on the opposite side of the second inlet ports 22 across the second flow channel 21. The second end wall 26 is a wall extending in the alignment direction of the second flow channels 21. The second end wall 26 blocks the inflow of the reaction gas G toward the space S1.

The second heat transfer body 20 includes a second connection flow channel 27 extending along the second end wall 26. The second connection flow channel 27 is connected with all the second flow channels 21 and the second discharge port 28. As similar to the first flow channel 11, the second connection flow channel 27 is a fluid channel, and there is no substantial difference between the two.

The heat exchange section 2 can be used as any of a liquid-liquid heat exchanger, a gas-gas heat exchanger and a gas-liquid heat exchanger. The reaction fluid R may be any of a gas and a liquid. The heat medium M may be any of a gas and a liquid. In addition, the reactor 1 of the present embodiment enables chemical synthesis through various thermal reactions such as endothermic and exothermic reactions. Examples of such syntheses by thermal reactions include endothermic reactions such as the steam reforming reaction of methane represented by formula (3), the dry reforming reaction of methane represented by formula (4), the shift reaction represented by formula (5), the methanation reaction represented by formula (6), and the Fischer Tropsch synthesis reaction represented by formula (7). Note that the reaction fluid R in these reactions is a gas.

$$CH_4 + H_2O \rightarrow 3H_2 + CO \cdots \qquad (3)$$

$$CH_4 + CO_2 \rightarrow 2H_2 + 2CO \cdots \qquad (4)$$

$$CO + H_2O \rightarrow CO_2 + H_2 \cdots \qquad (5)$$

$$CO + 3H_2 \rightarrow CH_4 + H_2O \cdots \qquad (6)$$

$$(2n+1)H_2 + nCO \rightarrow C_nH_{2n+2} + nH_2O \cdots \qquad (7)$$

It is desirable that the heat medium M is a substance that does not corrode the components of the reactor 1. When a heated gas is used as the heat medium M, gaseous materials such as a combustion gas and a heated air can be used. The heat medium M may be a liquid substance such as water or oil, for example.

## Claims

1. A heat exchange structure (50) comprising:

    a flow channel (51) thermally coupled with another flow passage (52) stacked to each other in a stacking direction; and
    a path-configuration portion (60) provided in the flow channel (51); wherein

    the path-configuration portion (60) includes:

    wall portions (61) forming a path of a main flow of a fluid (53); and
    a porous body (62) provided in the path and having permeability to the fluid (53),
    **characterized in that**
    the wall portions (61) have permeability to the fluid (53), and
    the permeability of the wall portions (61) is lower than the permeability of the porous body (62) to the fluid (53).

2. The heat exchange structure (50) according to claim 1, wherein

    the wall portions (61) include surfaces extending in a direction orthogonal to a longitudinal direction of the flow channel (51), and
    the wall portions (61) are arranged with intervals in the longitudinal direction of the flow channel (51) and are displaced in a direction parallel to the extending direction of the surface.

3. The heat exchange structure (50) according to claim 1, wherein

    the wall portions (61) are formed in plate shapes extending in the longitudinal direction of the flow channel (51), and
    the wall portions (61) are arranged in parallel with each other with intervals in a width direction of the flow channel (51).

4. The heat exchange structure (50) according to any of claims 1 to 3, wherein
    each of the wall portions (61) is made of an assembly of blocks.

5. The heat exchange structure (50) according to any of claims 1 to 4, wherein
    the wall portions (61) are metal foams formed of open celled bodies.

6. The heat exchange structure (50) according to any one of claim 1 to 5, wherein
    the porous body (62) is formed of an assembly of blocks.

7. The heat exchange structure (50) according to any one of claim 1 to 6, wherein
    the porous body (62) is a metal foam formed of an open celled body.

8. The heat exchange structure (50) according to any one of claim 1 to 7, wherein
    the path-configuration portion (60) is continuously disposed from an inlet of the flow channel (51) to an outlet of the flow channel (51).

9. The heat exchange structure (50) according to any one of claim 1 to 8, wherein
    the path-configuration portion (60) is divided into sections arranged along the flow channel (51).

10. The heat exchange structure (50) according to claim 9, wherein

the divided path-configuration portions are arranged at intervals along the flow channel (51).

11. The heat exchange structure (50) according to claim 10, wherein
intervals between the divided path-configuration portions or lengths of the divided path-configuration portions vary stepwise along the flow channel (51).

12. The heat exchange structure (50) according to any one of claim 1 to 11, wherein
the permeability of the porous body (62) varies stepwise according to a position of the porous body (62) in the flow channel (51).

13. The heat exchange structure (50) according to any one of claims 1 to 12, wherein
the path-configuration portion (60) is formed separately from the flow channel (51).

14. The heat exchange structure (50) according to any one of claims 1 to 13, wherein
the porous body (62) is supported with a catalyst.


**Patentansprüche**

1. Wärmetauschstruktur (50), die hat:

   einen Strömungskanal (51), der thermisch mit einem weiteren Strömungsdurchgang (52) gekoppelt ist, die in einer Stapelrichtung übereinander angeordnet sind; und
   einen im Strömungskanal (51) bereitgestellten Wegkonfigurationsabschnitt (60); wobei

   der Wegkonfigurationsabschnitt (60) hat:

   Wandabschnitte (61), die einen Weg einer Hauptströmung eines Fluids (53) ausbilden; und
   einen porösen Körper (62), der in dem Weg bereitgestellt ist und eine Durchlässigkeit für das Fluid (53) aufweist,
   **dadurch gekennzeichnet, dass**
   die Wandabschnitte (61) für das Fluid (53) durchlässig sind und
   die Durchlässigkeit der Wandabschnitte (61) für das Fluid (53) geringer ist als die Durchlässigkeit des porösen Körpers (62).

2. Wärmeaustauschstruktur (50) gemäß Anspruch 1, wobei

   die Wandabschnitte (61) Oberflächen haben, die sich in einer Richtung senkrecht zu einer Längsrichtung des Strömungskanals (51) erstrecken, und
   die Wandabschnitte (61) mit Abständen in der Längsrichtung des Strömungskanals (51) angeordnet sind und in einer Richtung parallel zur Erstreckungsrichtung der Oberfläche versetzt sind.

3. Wärmeaustauschstruktur (50) gemäß Anspruch 1, wobei

   die Wandabschnitte (61) in Plattenformen ausgebildet sind, die sich in Längsrichtung des Strömungskanals (51) erstrecken, und
   die Wandabschnitte (61) parallel zueinander mit Abständen in einer Breitenrichtung des Strömungskanals (51) angeordnet sind.

4. Wärmetauschstruktur (50) gemäß einem der Ansprüche 1 bis 3, wobei
jeder der Wandabschnitte (61) aus einer Baugruppe von Blöcken besteht.

5. Wärmetauschstruktur (50) gemäß einem der Ansprüche 1 bis 4, wobei
die Wandabschnitte (61) Metallschäume sind, die aus Körpern mit offenen Zellen ausgebildet sind.

6. Wärmetauschstruktur (50) gemäß einem der Ansprüche 1 bis 5, wobei
der poröse Körper (62) aus einer Baugruppe von Blöcken ausgebildet ist.

7. Wärmetauschstruktur (50) gemäß einem der Ansprüche 1 bis 6, wobei

der poröse Körper (62) ein Metallschaum ist, der aus einem Körper mit offenen Zellen ausgebildet ist.

8. Wärmeaustauschstruktur (50) gemäß einem der Ansprüche 1 bis 7, wobei
der Wegkonfigurationsabschnitt (60) kontinuierlich von einem Einlass des Strömungskanals (51) zu einem Auslass des Strömungskanals (51) angeordnet ist.

9. Wärmeaustauschstruktur (50) gemäß einem der Ansprüche 1 bis 8, wobei
der Wegkonfigurationsabschnitt (60) in entlang des Strömungskanals (51) angeordnete Abschnitte unterteilt ist.

10. Wärmeaustauschstruktur (50) gemäß Anspruch 9, wobei
die unterteilten Wegkonfigurationsabschnitte in Abständen entlang des Strömungskanals (51) angeordnet sind.

11. Wärmeaustauschstruktur (50) gemäß Anspruch 10, wobei
die Abstände zwischen den unterteilten Wegkonfigurationsabschnitten oder die Längen der unterteilten Wegkonfigurationsabschnitte entlang des Strömungskanals (51) stufenweise variieren.

12. Wärmetauschstruktur (50) gemäß einem der Ansprüche 1 bis 11, wobei
die Durchlässigkeit des porösen Körpers (62) entsprechend einer Position des porösen Körpers (62) im Strömungskanal (51) stufenweise variiert.

13. Wärmeaustauschstruktur (50) gemäß einem der Ansprüche 1 bis 12, wobei
der Wegkonfigurationsabschnitt (60) getrennt vom Strömungskanal (51) ausgebildet ist.

14. Wärmeaustauschstruktur (50) gemäß einem der Ansprüche 1 bis 13, wobei
der poröse Körper (62) mit einem Katalysator gehalten wird.


**Revendications**

1. Structure d'échange de chaleur (50) comprenant :

   un canal d'écoulement (51) couplé thermiquement à un autre passage d'écoulement (52), l'un empilé sur l'autre dans une direction d'empilement ; et
   une partie de configuration de trajet (60) disposée dans le canal d'écoulement (51) ; dans laquelle la partie de configuration de trajet (60) comporte :

   des parties de paroi (61) formant un trajet d'un écoulement principal d'un fluide (53) ; et
   un corps poreux (62) disposé sur le trajet et présentant une perméabilité au fluide (53), **caractérisée en ce que**
   les parties de paroi (61) présentent une perméabilité au fluide (53), et
   la perméabilité des parties de paroi (61) est inférieure à la perméabilité du corps poreux (62) au fluide (53).

2. Structure d'échange de chaleur (50) selon la revendication 1, dans laquelle

   les parties de paroi (61) comportent des surfaces s'étendant dans une direction orthogonale à une direction longitudinale du canal d'écoulement (51), et
   les parties de paroi (61) sont disposées à intervalles dans la direction longitudinale du canal d'écoulement (51) et sont déplacées dans une direction parallèle à la direction d'extension de la surface.

3. Structure d'échange de chaleur (50) selon la revendication 1, dans laquelle

   les parties de paroi (61) se présentent sous la forme de plaques s'étendant dans la direction longitudinale du canal d'écoulement (51), et
   les parties de paroi (61) sont disposées parallèlement les unes aux autres avec des intervalles dans la direction de la largeur du canal d'écoulement (51).

4. Structure d'échange de chaleur (50) selon l'une quelconque des revendications 1 à 3, dans laquelle
chacune des parties de paroi (61) est faite d'un ensemble de blocs.

**5.** Structure d'échange de chaleur (50) selon l'une quelconque des revendications 1 à 4, dans laquelle les parties de paroi (61) sont des mousses métalliques constituées de corps à cellules ouvertes.

**6.** Structure d'échange de chaleur (50) selon l'une quelconque des revendications 1 à 5, dans laquelle le corps poreux (62) est constitué d'un ensemble de blocs.

**7.** Structure d'échange de chaleur (50) selon l'une quelconque des revendications 1 à 6, dans laquelle le corps poreux (62) est une mousse métallique constituée d'un corps à cellules ouvertes.

**8.** Structure d'échange de chaleur (50) selon l'une quelconque des revendications 1 à 7, dans laquelle la partie de configuration de trajet (60) est disposée en continu depuis une entrée du canal d'écoulement (51) jusqu'à une sortie du canal d'écoulement (51).

**9.** Structure d'échange de chaleur (50) selon l'une quelconque des revendications 1 à 8, dans laquelle la partie de configuration de trajet (60) est divisée en sections disposées le long du canal d'écoulement (51).

**10.** Structure d'échange de chaleur (50) selon la revendication 9, dans laquelle les parties de configuration de trajet divisées sont disposées à intervalles le long du canal d'écoulement (51).

**11.** Structure d'échange de chaleur (50) selon la revendication 10, dans laquelle les intervalles entre les parties de configuration de trajet divisées ou les longueurs des parties de configuration de trajet divisées varient par paliers le long du canal d'écoulement (51).

**12.** Structure d'échange de chaleur (50) selon l'une quelconque des revendications 1 à 11, dans laquelle la perméabilité du corps poreux (62) varie par paliers en fonction d'une position du corps poreux (62) dans le canal d'écoulement (51).

**13.** Structure d'échange de chaleur (50) selon l'une quelconque des revendications 1 à 12, dans laquelle la partie de configuration de trajet (60) est formée séparément du canal d'écoulement (51).

**14.** Structure d'échange de chaleur (50) selon l'une quelconque des revendications 1 à 13, dans laquelle le corps poreux (62) est supporté par un catalyseur.

EP 4 462 060 B1

# FIG. 1

# FIG. 2

# FIG. 3

FIG. 4

FIG. 5

## FIG. 6

## FIG. 7

FIG. 8

FIG. 9A

FIG. 9B

FIG. 9C

FIG. 9D

FIG. 9E

EP 4 462 060 B1

# FIG. 10

# FIG. 11

EP 4 462 060 B1

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017140591 A
- WO 2014055045 A1
- JP 2006308127 A